# EUROPEAN PATENT SPECIFICATION

(11) **EP 4 344 938 B1**
(45) Date of publication and mention of the grant of the patent: **04.06.2025**
(21) Application number: 23198570.6
(22) Date of filing: 20.09.2023
(51) Int. Cl.: B60L 55/00, B60L 58/12

(54) **SYSTEM, METHOD, AND PROGRAM**
SYSTEM, VERFAHREN UND PROGRAMM
SYSTÈME, PROCÉDÉ ET PROGRAMME

(30) Priority: 28.09.2022 JP 2022155618
(43) Date of publication of application: 03.04.2024
(73) Proprietor: HONDA MOTOR CO., LTD., Minato-ku Tokyo 107-8556 (JP)
(72) Inventor: IDE, Tatsuya, Japan, 351-0193 (JP)
(74) Representative: Weickmann & Weickmann PartmbB

(56) References cited:
- CN-A- 113 067 370
- US-A1- 2021 122 260
- US-B2- 11 383 611

## Description

### BACKGROUND

### 1. TECHNICAL FIELD

The present invention relates to a system, a method, and a program.

### 2. RELATED ART

Japanese Patent Application Publication No. 2022-050126 describes a technology for utilizing a storage cell of an electric vehicle as a distributed energy resource according to an operational situation of the electric vehicle. PCT International Publication No. WO2018/167943 describes an adjustment system which manages a loan of an object or a space between users. Furthermore, US 11 383 611 B2 describes a control apparatus which includes an acquiring unit that acquires information indicating power demand in a first power network that supplies power in a first region including a future movement destination of a first vehicle and power demand in a second power network that supplies power in a second region including a future movement destination of a second vehicle, and a control unit that makes energy accumulated in or released from a driving power source provided to the first vehicle preferentially over a driving power source provided to the second vehicle, based on the power demand in the first power network, and the power demand in the second power network.

For a selection of vehicles which perform electric power transfer, it is not preferable that too many vehicles are selected for electric power transfer in terms of functional constraints as a movable object. In addition, a selection of numerous vehicles leads to complication of vehicle management.

### SUMMARY

According to a first aspect of the present invention, there is provided a system.

The system includes a plurality of vehicles and an acquisition unit which acquires information indicating a required electric power amount by which transfer of electric power is required between a battery included in a vehicle and an electric power network, and information indicating a transferable electric power amount by which the battery can transfer electric power with the electric power network, characterized that the system further comprises a selection unit which selects a vehicle with a smaller difference between the transferable electric power amount and the required electric power amount than others by priority among the plurality of vehicles as a vehicle including a battery which is to perform electric power transfer with the electric power network.

The system may include a classification unit which classifies the plurality of vehicles into a plurality of groups based on a combination of a state of charge of a battery included in each of the plurality of vehicles and the transferable electric power amount. The selection unit may select the vehicle including the battery which is to perform electric power transfer with the electric power network from among vehicles classified into a group which is selected based on information indicating whether electric power supply from the battery to the electric power network is required and the required electric power amount among the plurality of groups classified by the classification unit.

Any of the above described systems may include a classification unit which classifies the plurality of vehicles into a plurality of groups based on a combination of (i) a state of charge of a battery included in each of the plurality of vehicles and (ii) a time interval between a time at end of a period in which electric power is to be supplied from the battery to the electric power network and a scheduled time at which use of each of the plurality of batteries is to be started. When electric power is to be supplied from the battery to the electric power network, the selection unit may select a vehicle classified into a group having the time interval that is longer than others among the plurality of groups classified by the classification unit by priority as the vehicle including the battery which is to perform electric power transfer with the electric power network.

Any of the above described systems may include a classification unit which classifies the plurality of vehicles into a plurality of groups based on a combination of (i) a state of charge of a battery included in each of the plurality of vehicles and (ii) a time interval between a time at end of a period in which electric power is to be supplied from the electric power network to the battery and a scheduled time at which use of each of the plurality of batteries is to be started. When electric power is to be supplied from the electric power network to the battery, the selection unit may select a vehicle classified into a group having the time interval that is shorter than others among the plurality of groups classified by the classification unit by priority as the vehicle including the battery which is to perform electric power transfer with the electric power network.

According to a second aspect of the present invention, there is provided a method. The method for a system comprising a plurality of vehicles includes acquiring information indicating a required electric power amount by which transfer of electric power is required between a battery included in a vehicle and an electric power network, and information indicating a transferable electric power amount by which the battery can transfer electric power with the electric power network, characterized in that the system further includes selecting a vehicle with a smaller difference between the transferable electric power amount and the required electric power amount than others by priority among the plurality of vehicles as a vehicle including a battery which is to perform electric power transfer with the electric power network.

According to a third aspect of the present invention, a program is provided. The program causes a computer to function as any of the above described systems.

The summary of the present invention does not necessarily describe all necessary features of the present invention. The present invention may also be a sub-combination of the features described above.

### BRIEF DESCRIPTION OF THE DRAWINGS

Fig. 1 conceptually illustrates a utilization form of a system 5 in an embodiment.
Fig. 2 illustrates an example of a system configuration of a vehicle management apparatus 60.
Fig. 3 illustrates an example of a system configuration of an integrated management apparatus 50.
Fig. 4 illustrates an execution sequence of an electric power control apparatus 40, the integrated management apparatus 50, and the vehicle management apparatus 60.
Fig. 5 schematically illustrates grouping of vehicles 10 based on an SOC.
Fig. 6 schematically illustrates grouping of the vehicles 10 based on a time interval until a departure time of the vehicle 10.
Fig. 7 illustrates groups to be classified based on a combination of an SOC of a battery 12 and the time interval until the departure time.
Fig. 8 illustrates groups to be classified based on a combination of the SOC of the battery 12 and a transferable electric power amount.
Fig. 9 illustrates a list of a plurality of pieces of reservation information stored in the integrated management apparatus 50 and the vehicle management apparatus 60 in a table format.
Fig. 10 is a drawing for describing an example of processing of selecting the vehicle 10 which performs electric power transfer with a business establishment 30.
Fig. 11 illustrates an example of a computer 2000.

### DESCRIPTION OF EXEMPLARY EMBODIMENTS

Hereinafter, the present invention will be described by way of embodiments of the invention. However, the following embodiments are not intended for limiting the invention according to the claims. In addition, not all combinations of features described in the embodiment are essential to the solution of the invention.

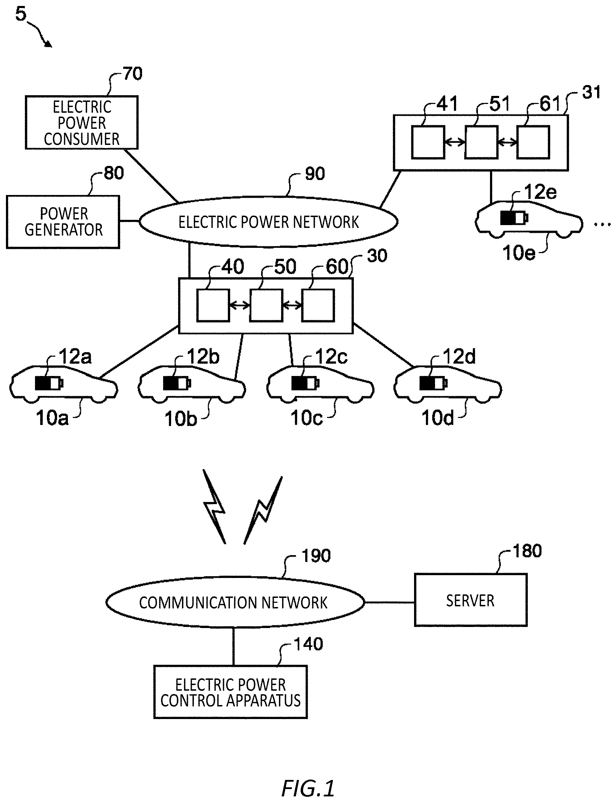

Fig. 1 conceptually illustrates a utilization form of a system 5 in an embodiment. The system 5 includes a power generation apparatus 80, a plurality of vehicles including a vehicle 10a, a vehicle 10b, a vehicle 10c, a vehicle 10d, and a vehicle 10e, an electric power control apparatus 40 and an electric power control apparatus 41, an integrated management apparatus 50 and an integrated management apparatus 51, a vehicle management apparatus 60 and a vehicle management apparatus 61, an electric power control apparatus 140, and a server 180.

An electric power consumer 70 and the power generation apparatus 80 are connected to an electric power network 90. Electric power generated by the power generation apparatus 80 can be supplied to the electric power consumer 70 through the electric power network 90. The electric power network 90 is an electric power system, for example.

The vehicle 10a, the vehicle 10b, the vehicle 10c, the vehicle 10d, and the vehicle 10e are electric vehicles respectively including a battery 12a, a battery 12b, a battery 12c, a battery 12d, and a battery 12e which store driving electric power for vehicle travelling. In the present embodiment, in particular, the vehicle 10a, the vehicle 10b, the vehicle 10c, and the vehicle 10d may be collectively referred to as a vehicle 10, and the battery 12a, the battery 12b, the battery 12c, and the battery 12d may be collectively referred to as a battery 12.

The vehicle 10 is deployed in a business establishment 30. The business establishment 30 serves as a base for the vehicle 10 to park. The vehicle 10 may be, for example, a commercial vehicle, or may be a vehicle for transporting a package such as a commercial product to be handled by the business establishment 30. Electric power is supplied to the business establishment 30 through the electric power network 90.

The electric power control apparatus 40, the integrated management apparatus 50, and the vehicle management apparatus 60 are provided in the business establishment 30. The vehicles 10 are provided so as to be communicable with the vehicle management apparatus 60 through a mobile communication network or the like. The business establishment 30 has a local electric power network in the business establishment, and can perform electric power transfer with the battery 12 included in the vehicle 10 through a charge and discharge apparatus provided in the business establishment 30. That is, the vehicle 10 is usable for energy management in the business establishment 30. The battery 12 included in the vehicle 10 can perform electric power transfer with the electric power network 90 through an electric power network in the business establishment 30. The electric power control apparatus 40 controls charge and discharge of the vehicle 10 deployed in the business establishment 30 so as to meet at least a power demand in the business establishment 30.

The electric power control apparatus 40, the integrated management apparatus 50, and the vehicle management apparatus 60 are managed in the business establishment 30, for example. The electric power control apparatus 40 and the integrated management apparatus 50 are provided so as to be communicable with each other by a communication line. The integrated management apparatus 50 and the vehicle management apparatus 60 are provided so as to be communicable with each other by a communication line. The integrated management apparatus 50 and the vehicle management apparatus 60 may be provided outside the business establishment 30. The integrated management apparatus 50 and the vehicle management apparatus 60 may be provided so as to be communicable with each other through a communication line such as the Internet. One or both of the integrated management apparatus 50 and the vehicle management apparatus 60 may be achieved by a server such as a cloud server.

The vehicle management apparatus 60 decides a time at which the vehicle 10 departs from the business establishment 30 and a time at which the vehicle 10 arrives back. The integrated management apparatus 50 adjusts the time at which the vehicle 10 departs from the business establishment 30 and the time at which the vehicle 10 arrives back so as to meet the power demand in the business establishment 30. For example, the integrated management apparatus 50 adjusts the time at which the vehicle 10 departs from the business establishment 30 and the time at which the vehicle 10 arrives back such that peak of the power demand in the business establishment 30 can be cut. The vehicle management apparatus 60 manages the vehicle 10 based on a schedule of the vehicle 10 which has been adjusted by the integrated management apparatus 50. The electric power control apparatus 40 controls charge and discharge of the battery 12 included in the vehicle 10 based on the schedule of the vehicle 10 which has been adjusted by the integrated management apparatus 50.

The vehicle 10e is deployed in a business establishment 31. The business establishment 31 serves as a base for the vehicle 10e to park. Similarly as in the vehicle 10, the vehicle 10e may be a commercial vehicle, or may be a vehicle for transporting a package such as a commercial product to be handled by the business establishment 31. Electric power is supplied to the business establishment 31 through the electric power network 90. The electric power control apparatus 41, the integrated management apparatus 51, and the vehicle management apparatus 61 are provided in the business establishment 31.

In the business establishment 31, the electric power control apparatus 41, the integrated management apparatus 51, and the vehicle management apparatus 61 correspond to the electric power control apparatus 40, the integrated management apparatus 50, and the vehicle management apparatus 60. The electric power control apparatus 41, the integrated management apparatus 51, and the vehicle management apparatus 61 perform similar control to that of the electric power control apparatus 40, the integrated management apparatus 50, and the vehicle management apparatus 60 except that a control target and/or a management target is the business establishment 31 and/or the vehicle 10e. Therefore, control related to the electric power control apparatus 41, the integrated management apparatus 51, the vehicle management apparatus 61, and the vehicle 10 is not described again.

The electric power control apparatus 140 communicates with the electric power control apparatus 40 and the electric power control apparatus 41 through a communication network 190, and governs overall electric power control in the business establishment 30 and the business establishment 31. For example, the electric power control apparatus 140 collects information related to power supply and demand from the electric power control apparatus 40 and the electric power control apparatus 41, and causes the electric power control apparatus 40 and the electric power control apparatus 41 to perform control such that a power cost as a whole of the business establishment 30 and the business establishment 31 is to be minimized by adjusting overall power supply and demand including an electric power trading with the electric power network 90.

The electric power control apparatus 140 is connected to the server 180 through the communication network 190. The server 180 is, for example, a server to be used by an electric power aggregator. The server 180 conducts an electric power trading in an electricity market. The electric power control apparatus 140 can provide the server 180 with electric power resources which are held by aggregating the vehicles deployed in the business establishment 30 and the business establishment 31. The electric power control apparatuses 40 and 41 control charge and discharge of the battery of each of the vehicles deployed in the business establishment 30 and the business establishment 31, and the electric power control apparatus 140 provides electric power agreed by the server 180. For example, the electric power control apparatus 140 controls charge and discharge of the battery 12 by the electric power control apparatus 40 and the electric power control apparatus 41 according to a demand from the server 180, and provides the electric power according to the demand.

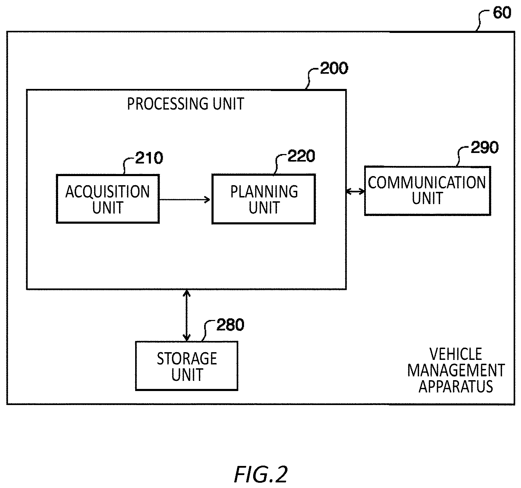

In connection to Fig. 2 to Fig. 10 and the like, control in connection to the business establishment 30 will be mainly described. Specifically, control related to the electric power control apparatus 40, the integrated management apparatus 50, the vehicle management apparatus 60, and the vehicle 10 will be described. However, the control in connection to the business establishment 30 can be applied to control in connection to the business establishment 31.

Fig. 2 illustrates an example of a system configuration of the vehicle management apparatus 60. The vehicle management apparatus 60 includes a processing unit 200, a storage unit 280, and a communication unit 290.

The processing unit 200 controls the communication unit 290.

The communication unit 290 is responsible for communication between the vehicle 10 and the integrated management apparatus 50. The processing unit 200 is achieved by a computing device including a processor. Each of the storage units 280 is achieved by including a non-volatile storage medium. The processing unit 200 performs processing by using information stored in the storage unit 280. The processing unit 200 may be achieved by a microcomputer including a CPU, a ROM, a RAM, an I/O, a bus, and the like. The vehicle management apparatus 60 may be achieved by a computer.

In the present embodiment, the vehicle management apparatus 60 is set to be achieved by a single computer. However, in other embodiments, the vehicle management apparatus 60 may be achieved by a plurality of computers. At least some functions of the vehicle management apparatus 60 may be achieved by one or more servers such as a cloud server.

The processing unit 200 includes an acquisition unit 210 and a planning unit 220. The planning unit 220 includes a selection unit 230.

The acquisition unit 210 acquires reservation information to reserve use of the vehicle 10 from among a plurality of vehicles 10. The reservation information includes, for example, a selection condition for a user to select the vehicle 10 to be used, and information to designate an importance of the selection condition. The selection condition includes, for example, at least one of a condition to select a period of use of the vehicle 10 or a condition to select a vehicle type. The storage unit 280 stores the reservation information acquired by the acquisition unit 210.

The acquisition unit 210 further acquires information indicating a current state of charge (SOC) and a storable capacity of the battery 12 included in the vehicle 10. The information indicating the current state of charge and the storable capacity of the battery 12 is stored in the storage unit 280.

The planning unit 220 prepares a use plan of the vehicle 10 based on the information stored in the storage unit 280. For example, the planning unit 220 prepares a vehicle dispatch plan indicating the vehicle 10 to be used by which user based on the selection condition stored in the storage unit 280.

The communication unit 290 transmits the vehicle dispatch plan to the integrated management apparatus 50. The communication unit 290 may further transmit at least a part of the reservation information to the integrated management apparatus 50. As will be described below, when the vehicle 10 to be used by the user is changed by arbitrating reservations in contention, the communication unit 290 may transmit a notification indicating that the vehicle 10 has been changed to the user who has had the reservation of the changed vehicle 10.

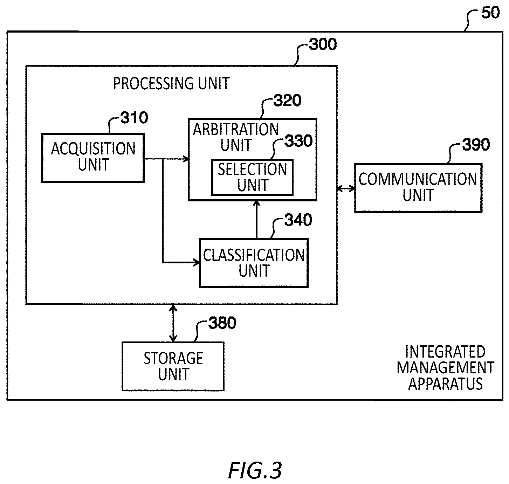

Fig. 3 illustrates an example of a system configuration of the integrated management apparatus 50. The integrated management apparatus 50 includes a processing unit 300, a storage unit 380, and a communication unit 390.

The processing unit 300 controls the communication unit 390. The communication unit 390 is responsible for communication between the electric power control apparatus 140 and the integrated management apparatus 50. The processing unit 300 is achieved by a computing device including a processor. Each of the storage units 380 is achieved by including a non-volatile storage medium. The processing unit 300 is configured to perform processing by using information stored in the storage unit 380. The processing unit 300 may be achieved by a microcomputer including a CPU, a ROM, a RAM, an I/O, a bus, and the like. The integrated management apparatus 50 may be achieved by a computer.

In the present embodiment, the integrated management apparatus 50 is set to be achieved by including a single computer. However, in other embodiments, the integrated management apparatus 50 may be achieved by a plurality of computers. At least some functions of the integrated management apparatus 50 may be achieved by including one or more servers such as a cloud server.

The processing unit 300 includes an acquisition unit 310, an arbitration unit 320, and a classification unit 340. The arbitration unit 320 includes a selection unit 330.

The acquisition unit 310 acquires information indicating a required electric power amount by which transfer of electric power is required between the battery 12 included in the vehicle 10 and the electric power network, and information indicating a transferable electric power amount by which the battery 12 can transfer electric power with the electric power network. The acquisition unit 310 may acquire the information indicating the required electric power amount from the electric power control apparatus 40. The acquisition unit 310 may acquire the information indicating the transferable electric power amount from the vehicle management apparatus 60. The information indicating the transferable electric power amount may be the state of charge and the storable capacity of the battery 12, for example. The electric power network is, for example, the electric power network in the business establishment 30 and/or the electric power network 90.

The selection unit 330 selects the vehicle 10 with a smaller difference between the transferable electric power amount and the required electric power amount than others by priority among a plurality of vehicles 10 as the vehicle 10 including the battery 12 which is to perform electric power transfer with the electric power network. In this manner, a number of vehicles 10 required to perform electric power transfer with the business establishment 30 can be reduced. Accordingly, a situation can be avoided where a number of vehicles 10 available for sales and delivery of articles does not become too low.

The classification unit 340 classifies a plurality of vehicles 10 into a plurality of groups based on a combination of the state of charge and the transferable electric power amount of the battery 12 included in each of the plurality of vehicles 10. The selection unit 330 selects the vehicle 10 including the battery 12 which is to perform electric power transfer with the electric power network from among the vehicles 10 classified into a group which is selected based on information indicating whether electric power supply is required from the battery 12 to the electric power network and the required electric power amount among the plurality of groups classified by the classification unit 340. By performing the management by way of the groups based on the combination of the state of charge and the transferable electric power amount of the battery 12, a computational load for selecting the battery 12 which is to perform electric power transfer with the electric power network can be lightened. In this manner, it is possible to postpone a decision on the vehicle to a point immediately before start of electric power transfer with the electric power network. Additionally, it is possible to select the vehicle 10 which performs electric power transfer by also including the vehicle 10 which arrives back to the business establishment 30 immediately before the start of electric power transfer.

The classification unit 340 classifies a plurality of vehicles 10 into a plurality of groups based on a combination of (i) a state of charge of the battery 12 included in each of the plurality of vehicles 10 and (ii) a time interval between a time at end of a period in which electric power is to be supplied from the battery 12 to the electric power network and a scheduled time at which use of each of the plurality of batteries 12 is to be started. When electric power is to be supplied from the battery 12 to the electric power network, the selection unit 330 selects the vehicle 10 classified into a group having the longer time interval than others by priority among the plurality of groups classified by the classification unit 340 as the vehicle 10 including the battery 12 which is to perform electric power transfer with the electric power network. In this manner, an influence from a fall of the SOC of the battery 12 which is used for a lower DR can be minimized by a time at which the next use is to be started. In this manner, since rapid charge of the battery 12 can be suppressed, it is possible to reduce a deterioration of the battery 12.

The classification unit 340 classifies a plurality of vehicles 10 into a plurality of groups based on a combination of (i) a state of charge of the battery 12 included in each of the plurality of vehicles 10 and (ii) a time interval between a time at end of a period in which electric power is to be supplied from the electric power network to the battery 12 and a scheduled time at which use of each of the plurality of batteries 12 is to be started. When electric power is to be supplied from the electric power network to the battery 12, the selection unit 330 selects the vehicle 10 classified into a group having the shorter time interval than others among the plurality of groups classified by the classification unit 340 by priority as the vehicle 10 including the battery 12 which is to perform electric power transfer with the electric power network. In this manner, the vehicle 10 including the battery 12 having an increased state of charge by using the battery 12 for a higher DR can be used for travelling shortly after the higher DR is ended. Accordingly, a duration in which a full charge state is kept for a long period of time can also be reduced, and it is possible to expect for a reduction effect of the battery deterioration.

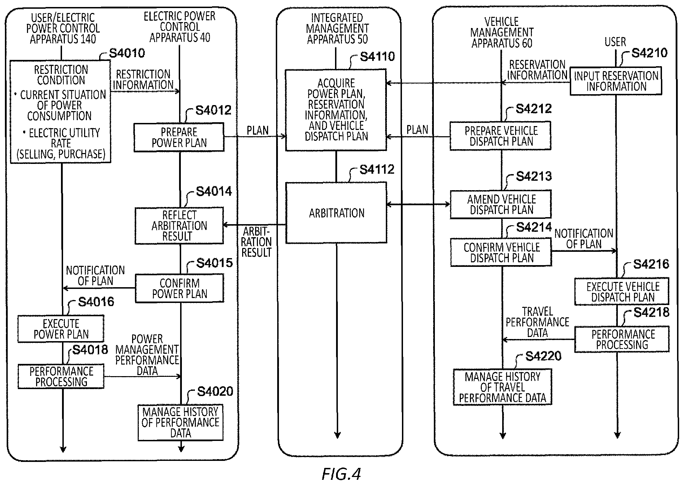

Fig. 4 illustrates an execution sequence of the electric power control apparatus 40, the integrated management apparatus 50, and the vehicle management apparatus 60. Processing of Fig. 4 represents processing from plan preparation, which is conducted the day before, for a power plan and a vehicle dispatch plan of the next day up to execution of various types of control according to the prepared plans.

As control related to the electric power control apparatus 40, in S4010, at least either one of the user of the electric power control apparatus 40 and the electric power control apparatus 140 sets a restriction condition related to the power plan in the business establishment 30 and notifies the electric power control apparatus 40 of the restriction condition. The electric power control apparatus 140 may set the restriction condition in the business establishment 30 such that an overall power cost in the business establishment 30 and the business establishment 31 is to be minimized. Note that the user is a person or system that inputs information related to power management in the business establishment 30 to the electric power control apparatus 40. The restriction condition is a condition which becomes a restriction for the preparation of the power plan. The restriction condition may include a restriction required to meet a power demand. The restriction condition includes, for example, information related to a current situation of a generated power amount, a current situation of power consumption, and an electric utility rate. The generated power amount is a generated power amount in the power generation apparatus 80, for example. The power consumption is power consumption in the business establishment 30. The electric utility rate includes a power purchase price and a power selling price. The power purchase price is a condition related to a money amount charged as a consideration value for reception of power by the business establishment 30 from the electric power network 90, for example. The power selling price is a condition related to a money amount earned as a consideration value for supply of power by the business establishment 30 to the electric power network 90, for example.

In S4012, the electric power control apparatus 40 prepares a power plan of the next day in the business establishment 30. The power plan includes a consumed power amount for each time slot in one day. The power plan sets how much electric power is to be consumed in each time slot in the business establishment 30. The consumed power amount for each time slot of the next day may be predicted from environment information such as weather information of the next day and past performance data. The power plan may include peak shave information to perform peak shaving. The peak shave information may include information indicating how much of the amount of power consumption is to be suppressed in which time slot in the business establishment 30. The peak shave information may include information indicating how much of the amount of power is to be received from the outside in which time slot in the business establishment 30.

The electric power control apparatus 40 may prepare an optimal power plan in the business establishment 30. For example, the electric power control apparatus 40 may prepare the power plan such that the amount of electric power received from the electric power network 90 in the business establishment 30 becomes minimal. The electric power control apparatus 40 may prepare the power plan such that the money amount to be charged as a consideration value for reception of power from the electric power network 90 in the business establishment 30 becomes minimal. The electric power control apparatus 40 may prepare the power plan such that the money amount to be earned as a consideration value for supply of power to the electric power network 90 in the business establishment 30 becomes maximum. In this manner, the electric power control apparatus 40 prepares the optimal power plan as the power plan of the next day in the business establishment 30 based on the restriction condition. This power plan sets an amount of electric power required to receive from the outside in each time slot of the next day. The amount of electric power required to receive from the outside may be supplied from the battery 12 included in the vehicle 10 parked in the business establishment 30. The electric power control apparatus 40 transmits the prepared power plan to the integrated management apparatus 50.

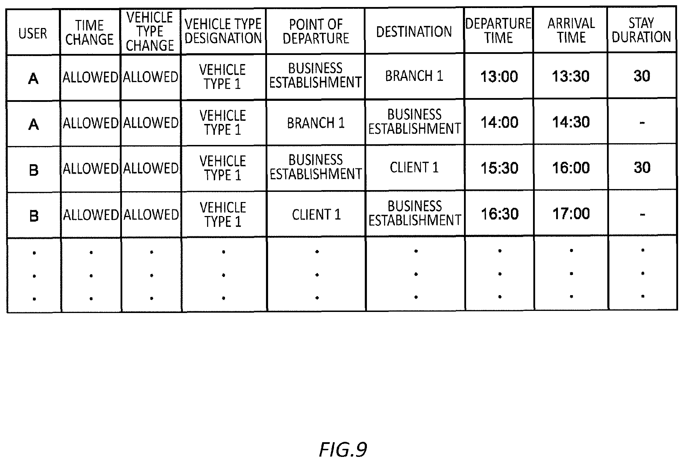

As control related to the vehicle management apparatus 60, in S4210, the user inputs reservation information related to dispatch of the vehicle 10. Content of the reservation information will be specifically described in connection to Fig. 9 and the like. The user of the vehicle management apparatus 60 is a person, system, or the like that uses the vehicle 10. The reservation information includes a condition which may become a restriction upon preparation of a vehicle dispatch plan. The reservation information includes, for example, a point of departure and a destination, a departure time and an arrival time at the destination, and a type, a volume, a weight, and the like of payload in the vehicle 10. From which location to which location the vehicle 10 is required to travel are set by the point of departure and the destination. The departure time may be, for example, a time at which the vehicle 10 departs from the business establishment 30, and the arrival time may be, for example, a time at which the vehicle 10 arrives back to the business establishment 30. A time adjustment allowance indicating a period of time by which a change to the departure time and the arrival time of the vehicle 10 can be allowed may be set for the departure time and the arrival time. The reservation information input in S4210 is transmitted to the vehicle management apparatus 60, and also transmitted to the integrated management apparatus 50 through the vehicle management apparatus 60.

In S4212, the planning unit 220 of the vehicle management apparatus 60 prepares a vehicle dispatch plan of the next day in the business establishment 30 based on the restriction condition notified from the user. For example, the planning unit 220 decides the vehicle 10 to be used to transport a person or payload, a travelling route of the vehicle 10, and a travelling speed of the vehicle 10 such that a transport demand set by the reservation information is met. The vehicle management apparatus 60 transmits the prepared vehicle dispatch plan to the integrated management apparatus 50. At this time, the vehicle management apparatus 60 transmits information indicating an SOC and an SOH of the battery 12 of the vehicle 10 to the integrated management apparatus 50 together with the vehicle dispatch plan.

In S4110, the acquisition unit 310 of the integrated management apparatus 50 acquires the power plan transmitted from the electric power control apparatus 40, and the reservation information and the vehicle dispatch plan which are transmitted from the vehicle management apparatus 60.

In S4112, when the vehicle 10 is operated according to the vehicle dispatch plan, the arbitration unit 320 of the integrated management apparatus 50 determines whether the power plan in the business establishment 30 is met. For example, a period in which the vehicle 10 is predicted to be present in the business establishment 30 is set from the vehicle dispatch plan. During a period in which the business establishment 30 requires power supply from the outside, the arbitration unit 320 determines that the power plan is met when it is predicted that power can be received from the battery 12 included in the vehicle 10 which is present in the business establishment 30 during the above described period.

When it is determined that it is not possible to meet the power plan once the vehicle is dispatched according to the vehicle dispatch plan, the arbitration unit 320 determines how the vehicle dispatch plan is to be amended such that the power plan can be met. For example, the arbitration unit 320 decides adjustment amounts of the departure time and the arrival time of the vehicle 10 in the vehicle dispatch plan.

The integrated management apparatus 50 transmits amendment information including the decide adjustment amounts of the departure time and the return time to the vehicle management apparatus 60. When the amendment information is received from the integrated management apparatus 50, the planning unit 220 of the vehicle management apparatus 60 amends the vehicle dispatch plan prepared in S4212 based on the amendment information (S4213). For example, the planning unit 220 amends the vehicle dispatch plan such that the reservation information is to be met based on the adjustment amounts of the departure time and the return time which are received from the integrated management apparatus 50. The vehicle management apparatus 60 transmits an amendment result of the vehicle dispatch plan to the integrated management apparatus 50. The integrated management apparatus 50 and the vehicle management apparatus 60 repeat the processing in S4112 and S4213 to decide a feasible vehicle dispatch plan. In S4213, the planning unit 220 decides an operation route of the vehicle 10, and decides the feasible vehicle dispatch plan by determining whether the departure time and the arrival time which are designated by the reservation information can be kept, and also the vehicle 10 can arrive back to the business establishment 30 without running out of electric power based on the SOC and a power consumption rate of the vehicle 10. In addition, in S4112, the arbitration unit 320 may determine that the vehicle dispatch plan is feasible under a condition that it is determined that an overall profit is to be attained by taking into account a power cost reduction amount in the business establishment 30 which is obtained when electric power transfer is performed between the battery 12 and the business establishment 30 according to the power plan to be decided, and an operation cost of the vehicle 10 and an operation rate of the vehicle 10 which are required when the operation of the vehicle 10 is performed according to the vehicle dispatch plan.

When the vehicle dispatch plan is decided, an arbitration result including the vehicle dispatch plan is transmitted to the electric power control apparatus 40. When the arbitration result is received from the integrated management apparatus 50, the power plan is reflected based on the arbitration result (S4014), and the electric power control apparatus 40 notifies the user of the power plan which has been confirmed by reflecting the arbitration result (S4015). In S4016, the user and the electric power control apparatus 140 execute control according to the notified power plan. In S4018, the user and the electric power control apparatus 140 perform performance processing related to execution of the power plan. For example, the user performs processing of collecting and inputting performance data of power management including performance data of the consumed power amount in each time slot. In S4020, the electric power control apparatus 40 manages the performance data input from each of the user and the electric power control apparatus 140 as history information. Note that the electric power control apparatus 40 may use the history information managed by the electric power control apparatus 40 when the power plan is to be prepared later.

The vehicle dispatch plan finally decided in S4213 is confirmed by the vehicle management apparatus 60 (S4214), and the vehicle management apparatus 60 notifies the user of the confirmed vehicle dispatch plan through the communication unit 290. In S4216, the user executes operation control of the vehicle 10 according to the notified vehicle dispatch plan. In S4218, the user performs the performance processing related to execution of the vehicle dispatch plan. For example, the user performs processing of collecting and inputting travel performance data including travel data of each of the vehicles 10, a remaining capacity of the battery 12, and the like. In S4220, the vehicle management apparatus 60 manages the travel performance data input from the user as the history information. Note that the vehicle management apparatus 60 may use the history information managed by the vehicle management apparatus 60 when the vehicle dispatch plan is to be prepared later.

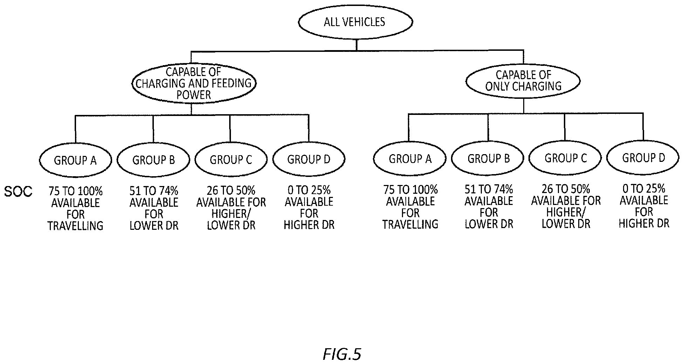

Fig. 5 schematically illustrates grouping of the vehicles 10 based on the SOC. First, the vehicles 10 are classified into the vehicle 10 which is capable of charging the battery 12 and feeding power, and the vehicle 10 which is capable of only charging the battery 12. The vehicle 10 which is capable of charging and feeding is a vehicle having not only a function of charging the battery 12 but also a function of feeding power obtained by discharging the battery 12 to an external electric power network. The vehicle 10 which is capable of only charging is a vehicle which has a function of charging the battery 12 but does not have a function of feeding power obtained by discharging the battery 12 to the outside, or a vehicle which is not connected to a charger having a function of feeding power to the outside.

Each of the vehicles 10 capable of charging and feeding and the vehicles 10 capable of only charging is classified into Group A to Group D based on the SOC of the battery 12. As an example, Group A is for a vehicle including the battery 12 in which the SOC is 75% or more and 100% or less. Group B is for a vehicle including the battery 12 in which the SOC is 51% or more and 74% or less. Group C is for a vehicle including the battery 12 in which the SOC is 26% or more and 50% or less. Group D is for a vehicle including the battery 12 in which the SOC is 0% or more and 25% or less.

The vehicle 10 classified into Group A represents a vehicle available for travelling, that is, a vehicle in which travel preparation has been completed. The vehicle 10 belonging to Group B is a vehicle including the battery 12 having a remaining battery level available for a lower demand response (DR). The vehicle 10 classified into Group C is a vehicle to which the battery 12 having a remaining battery level mainly available for any of the lower DR and the higher DR is mounted. The vehicle 10 belonging to Group D is a vehicle including the battery 12 having a remaining battery level mainly available for the higher DR.

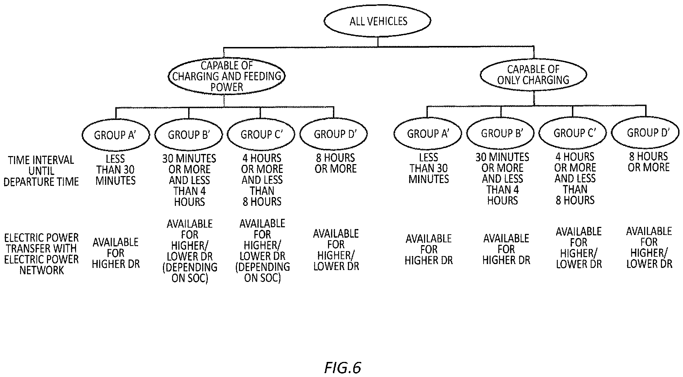

Fig. 6 schematically illustrates grouping of the vehicles 10 based on a time interval until a departure time of the vehicle 10. As described above, the vehicles 10 are classified into the vehicle 10 which is capable of charging the battery 12 and feeding power, and the vehicle 10 which is capable of only charging the battery 12.

Each of the vehicles 10 capable of charging and feeding and the vehicles 10 capable of only charging is classified into Group A'to Group D' based on the time interval until the departure time of the vehicle 10. As an example, Group A' is for a vehicle in which the time interval until the departure time is less than 30 minutes. Group B' is for a vehicle in which the time interval until the departure time is 30 minutes or more and less than 4 hours. Group C' is for a vehicle in which the time interval until the departure time is 4 hours or more and less than 8 hours. Group D' is for a vehicle in which the time interval until the departure time is 8 hours or more.

The vehicle 10 classified into Group A' is a vehicle scheduled to depart from the business establishment 30 in a time less than 30 minutes. When the vehicle 10 classified into Group A' is used for the lower DR, the remaining capacity of the battery 12 falls. However, since a period of time until the departure time is short, there is a possibility that the remaining capacity of the battery 12 cannot be sufficiently increased. Therefore, the vehicle 10 classified into Group A' is a vehicle available for only the higher DR.

The vehicle 10 classified into Group B' is a vehicle in which the time interval until the departure time is 30 minutes or more and less than 4 hours. There is a time of 30 minutes or more until the departure time for the vehicle 10 belonging to Group B'. Depending on the SOC of the battery 12, even when the vehicle 10 is used for the lower DR, the SOC may be able to be increased by the departure time. Therefore, the vehicle 10 classified into Group B' is a vehicle which is available for the higher DR and is also available for the lower DR depending on the SOC.

The vehicle 10 classified into Group C' is a vehicle in which the time interval until the departure time is 4 hours or more and less than 8 hours. Similarly as in Group B', there is a time of 4 hours or more until the departure time for the vehicle 10 classified into Group C'. Depending on the SOC of the battery 12, even when the vehicle 10 is used for the lower DR, the SOC may be able to be increased by the departure time. Therefore, the vehicle 10 classified into Group C' is a vehicle which is available for the higher DR and is also available for the lower DR depending on the SOC.

The vehicle 10 classified into Group D' is a vehicle in which the time interval until the departure time is 8 hours or more. There is a time of 8 hours or more until the departure time for the vehicle 10 classified into Group D'. Even when the vehicle 10 is used for the lower DR, the SOC can be increased by the departure time. Therefore, the vehicle 10 classified into Group D' is a vehicle which is available for the higher DR and the lower DR.

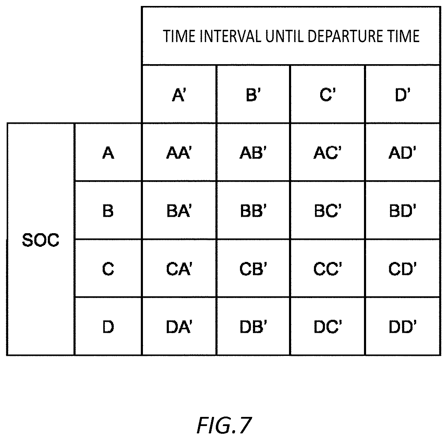

Fig. 7 illustrates groups to be classified based on a combination of the SOC of the battery 12 and the time interval until the departure time.

The classification unit 340 classifies the vehicles 10 into any of sixteen groups based on a combination of the four groups based on the SOC and the four groups based on the time interval until the departure time. For example, the vehicle 10 in which the SOC is in a range of Group A and the time interval until the departure time is in a range of Group B' is classified into Group AB'. The vehicle 10 in which the SOC is in a range of Group B and the time interval until the departure time is in a range of Group C' is classified into Group BC'. In general, when a vehicle in which the SOC is in a range of Group X and the time interval until the departure time is in a range of Group Y' is concerned, the vehicle is classified into Group XY'.

The selection unit 330 selects the vehicle 10 to be used for electric power transfer with the business establishment 30 from among the vehicles 10 classified into the groups based on a combination of the SOC and the time interval until the departure time. For example, since the vehicle 10 classified into Group AA' is a vehicle which is about to depart immediately, the selection unit 330 does not select this vehicle as the vehicle 10 to be used for electric power transfer with the business establishment 30. When it is necessary to deal with the lower DR, the selection unit 330 suffices if, after the SOC of the battery 12 falls due to the lower DR, the SOC can be increased by the departure time. Therefore, the selection unit 330 may select the vehicle 10 which is to deal with the lower DR from among the vehicles 10 classified into any of Group BB', Group BC', Group BD', Group CC', and Group CD'.

On the other hand, when the vehicle 10 which is to deal with the higher DR is selected, the selection unit 330 may select the vehicle 10 from among the vehicles 10 classified into any of Group CA', Group CB', Group CC', Group CD', Group DA', Group DB', Group DC', and Group DD'.

In this manner, the selection unit 330 can select the vehicle 10 which is to deal with the higher DR or the vehicle 10 which is to deal with the lower DR from among the vehicles 10 classified into particular groups among a plurality of groups. Therefore, it is possible to mitigate a computational load to retrieve the vehicle 10 which matches the condition.

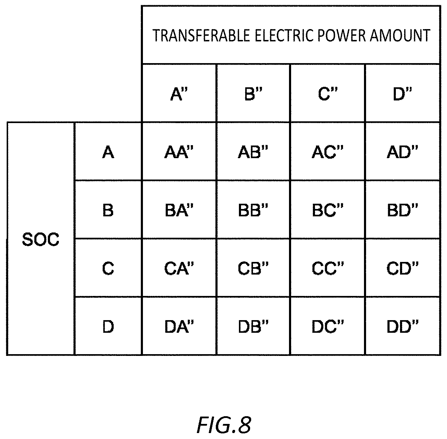

Fig. 8 illustrates groups to be classified based on a combination of the SOC of the battery 12 and the transferable electric power amount. The transferable electric power amount is calculated from the SOC of the battery 12 and a storage capacity of the battery 12. When the lower DR is dealt with, the transferable electric power amount is an amount of electric power which can be supplied to the outside from the battery 12. When the higher DR is dealt with, the transferable electric power amount is an amount of electric power which can be supplied to the battery 12 from the outside.

The classification unit 340 classifies the vehicles 10 into any of sixteen groups based on a combination of the four groups based on the SOC and the four groups based on the transferable electric power amount. For example, the vehicle 10 in which the SOC is in a range of Group A and the transferable electric power amount is in a range of Group B" is classified into Group AB". The vehicle 10 in which the SOC is in a range of Group B and the transferable electric power amount is in a range of Group C" is classified into Group BC". In general, when a vehicle in which the SOC is in a range of Group X and the transferable electric power amount is in a range of Group Y" is concerned, the vehicle is classified into Group XY". In the present embodiment, it is assumed that Group A" is a group corresponding to the highest transferable electric power amount, and Group D" is a group corresponding to the lowest transferable electric power amount.

When the vehicle 10 which deals with the lower DR is selected, the selection unit 330 selects one group which has the required electric power amount or more required to be supplied from the battery 12 to the business establishment 30 and which is associated with the transferable electric power amount closest to the required electric power amount among Group A" to Group D". The selection unit 330 selects the vehicle 10 which deals with the lower DR from among the vehicles 10 classified into groups with a combination of the one group which has been selected and Group B or Group C which can deal with the lower DR. For example, when Group B" is selected based on the required electric power amount and the transferable electric power amount, the selection unit 330 selects the vehicle 10 which deals with the lower DR from among the vehicles 10 classified into either one of Group BB" and Group CB".

Similarly when the vehicle 10 which deals with the higher DR is selected, the selection unit 330 selects one group which has the required electric power amount or more required to be received by the battery 12 from the business establishment 30 and which is associated with the transferable electric power amount closest to the required electric power amount among Group A" to Group D". The selection unit 330 selects the vehicle 10 which deals with the higher DR from among the vehicles 10 classified into groups with a combination of the one group which has been selected and Group B or Group C which can deal with the higher DR.

In this manner, the selection unit 330 can select the vehicle 10 which is to deal with the higher DR or the vehicle 10 which is to deal with the lower DR from among the vehicles 10 classified into particular groups among a plurality of groups. Therefore, it is possible to mitigate a computational load to retrieve the vehicle 10 which can deal with the higher DR.

Fig. 9 illustrates a list of a plurality of pieces of the reservation information stored in the integrated management apparatus 50 and the vehicle management apparatus 60 in a table format. Each piece of the reservation information includes information indicating "user", "time change", "vehicle type change", "vehicle type designation", "point of departure", "destination", "departure time", "arrival time", and "stay duration". "Vehicle type designation", "point of departure", "destination", "departure time", "arrival time", and "stay duration" among the information included in the reservation information are examples of the selection condition of the vehicle 10 used by the user. "Time change" and "vehicle type change" are examples of the information to designate an importance of the selection condition.

"User" is identification information of a person who uses the vehicle 10.

"Time change" is information indicating whether a change to a selection condition related to the period of use is allowed. The selection condition related to the period of use is "departure time", "arrival time", and "stay duration" which will be described below. "Not allowed" for "time change" indicates that a change to the selection condition related to the period of use is not allowed. "Allowed" for "time change" indicates that a change to the selection condition related to the period of use is allowed. "Time change" is an example of information to designate an importance of the selection condition related to the period of use.

"Vehicle type change" is information indicating whether a change to the selection condition related to a type of a vehicle to be used (vehicle type) is allowed. The selection condition related to the vehicle type is "vehicle type designation" which will be described below. "Not allowed" for "vehicle type change" indicates that a change to the selection condition related to the vehicle type is not allowed. "Allowed" for "vehicle type change" indicates that a change to the selection condition related to the vehicle type is allowed. "Vehicle type change" is an example of information to designate an importance of the selection condition related to the vehicle type.

"Vehicle type designation" is designated when use of a vehicle of a particular vehicle type is desired. "Vehicle type designation" is identification information of the vehicle type.

"Point of departure" indicates a point of departure of the vehicle 10. "Destination" indicates a destination of the vehicle 10.

"Departure time" is a scheduled time for the vehicle 10 to depart from the point of departure. "Arrival time" is a scheduled time for the vehicle 10 to arrive at the destination. "Stay duration" indicates a length of the time for the vehicle 10 to stay at the destination. As an example, "stay duration" of Fig. 9 indicates a length of the time to stay at the destination in minutes. The reservation information in a case where the destination is the business establishment 30 does not include "stay duration".

In the example of Fig. 9, according to reservation information of a user A, use of the vehicle 10 is reserved to depart from the business establishment at 13:00, arrive at a location of a branch 1 at 13:30, stay for 30 minutes at the location of the branch 1, depart from the location of the branch 1 at 14:00, and arrive at the business establishment 30 at 14:30. In this reservation, it is designated that a time change and a vehicle type change are allowed.

In the example of Fig. 9, according to reservation information of a user B, use of the vehicle 10 is reserved to depart from the business establishment at 15:30, arrive at a location of a client 1 at 16:00, stay for 30 minutes at the location of the client 1, depart from the location of the client 1 at 16:30, and arrive at the business establishment 30 at 17:00. In this reservation, it is designated that a time change and a vehicle type change are allowed.

When a contention occurs in reservations, the arbitration unit 320 arbitrates the reservations in contention based on the reservation information. For example, the arbitration unit 320 adjusts the reservations in contention by adjusting the departure time and the arrival time. In addition, the selection unit 330 of the arbitration unit 320 adjusts the reservations in contention by selecting another vehicle 10 to be used by the user. The reservation information may further include, as the selection condition, information indicating a time adjustment allowance which indicates a period of time by which a change to the departure time and/or the arrival time can be allowed. The arbitration unit 320 may adjust the reservations in contention by adjusting the departure time and/or the arrival time within a range of the time adjustment allowance.

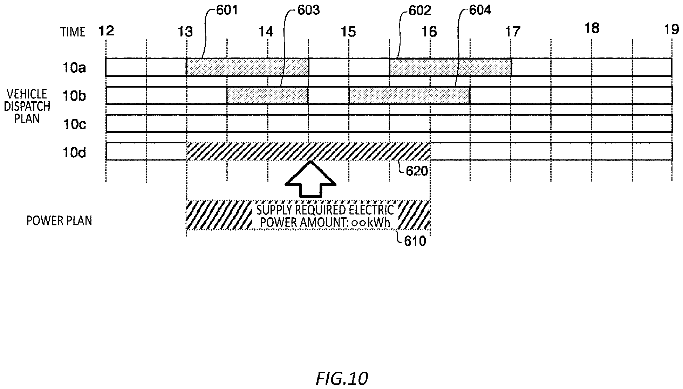

Fig. 10 is a diagram for describing an example of processing of selecting the vehicle 10 which performs electric power transfer with the business establishment 30.

As illustrated in Fig. 10, according to the vehicle dispatch plan prepared by the vehicle management apparatus 60, as indicated by sign 601 and sign 602, the vehicle 10a is planned to be used during a period from 13:00 to 14:30 and a period from 15:30 to 17:00. Furthermore, as indicated by sign 603 and sign 604, the vehicle 10b is planned to be used during a period from 13:30 to 14:30 and a period from 15:00 to 16:30.

As indicated by sign 610 in Fig. 10, according to the power plan prepared by the electric power control apparatus 40, during a period from 13:00 to 16:00, any of the vehicles 10 is planned to be used to supply power from the battery 12 to the business establishment 30 for peak cut of the business establishment 30. The vehicle 10c and the vehicle 10d are not scheduled to be used during a period from 13:00 to 16:00. The selection unit 330 selects a vehicle to be used to supply electric power from the battery 12 to the business establishment 30 for peak cut in the business establishment 30 out of the vehicle 10c and the vehicle 10d as will be described below.

First, it is assumed that the vehicle 10c and the vehicle 10d are classified into Group B based on the SOC of the battery 12. In addition, it is assumed that the vehicle 10c and the vehicle 10d have 8 hours or more for the time interval from the finishing time, which is 16:00, of the period during which power is to be supplied from the battery 12 until the next departure time. Accordingly, as described in connection to Fig. 5 to Fig. 7, and the like, it is assumed that the vehicle 10c and the vehicle 10d are classified into Group BD' which can deal with the lower DR.

Then, it is assumed that the vehicle 10c is classified into Group C" based on the transferable electric power amount which can be supplied from the battery 12c, and the vehicle 10d is classified into Group B" based on the transferable electric power amount which can be supplied from the battery 12d. It is assumed that a supply required electric power amount which is required to be supplied from the battery 12 which has been designated by the power plan is in a range of the transferable electric power amount corresponding to Group B". The selection unit 330 selects the vehicle 10d as a vehicle to be used to supply electric power to the business establishment 30 from among the vehicles 10 classified into either one of Group BB" and Group CB". The selection unit 330 confirms the vehicle 10d as the vehicle to be used to supply electric power to the business establishment 30 by checking that the transferable electric power amount of the battery 12d is more than the supply required electric power amount.

As described above, as indicated by sign 620, the vehicle 10d is reserved during a period from 13:00 to 16:00 to supply electric power to the business establishment 30 from the vehicle 10d. In this manner, the vehicle 10d including the battery 12d which has the transferable electric power amount close to the supply required electric power amount and which can also recover the SOC after power is supplied to the business establishment 30 can be selected as the vehicle to supply electric power to the business establishment 30. Accordingly, it is possible to reduce the number of vehicles required to supply electric power to the business establishment 30. In this manner, still more vehicles 10 can be used as commercial vehicles or vehicles for transporting articles in the business establishment 30.

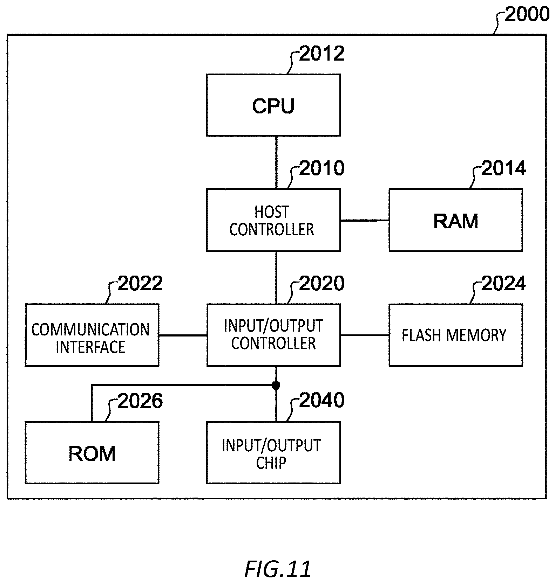

Fig. 11 illustrates an example of a computer 2000 in which a plurality of embodiments of the present invention can be entirely or partially embodied. Programs installed in the computer 2000 can cause the computer 2000 to: function as the system 5 according to the embodiments or each unit of the system 5 or an apparatus such as the electric power control apparatus 40 and the vehicle management apparatus 60 or each unit of the apparatus; execute operations associated with the system or each unit of the system or the apparatus or each unit of the apparatus; and/or execute a process according to the embodiments or steps of the process. Such a program may be executed by a CPU 2012 in order to cause the computer 2000 to execute a specific operation associated with some or all of the processing procedures and the blocks in the block diagrams described herein.

The computer 2000 according to the present embodiment includes the CPU 2012 and a RAM 2014, which are mutually connected by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to programs stored in the ROM 2026 and the RAM 2014, and thereby controls each unit.

The communication interface 2022 communicates with other electronic devices via a network. The flash memory 2024 stores a program and data used by the CPU 2012 in the computer 2000. The ROM 2026 stores a boot program or the like executed by the computer 2000 during activation, and/or a program depending on hardware of the computer 2000. The input/output chip 2040 may also connect various input/output units such as a keyboard, a mouse, and a monitor, to the input/output controller 2020 via input/output ports such as a serial port, a parallel port, a keyboard port, a mouse port, a monitor port, a USB port, a HDMI (registered trademark) port.

A program is provided via a network or a computer readable storage medium such as a CD-ROM, a DVD-ROM, or a memory card. The RAM 2014, the ROM 2026, or the flash memory 2024 is an example of the computer readable storage medium. The program is installed in the flash memory 2024, the RAM 2014 or the ROM 2026 and executed by the CPU 2012. Information processing written in these programs is read by the computer 2000, and provides cooperation between the programs and the various types of hardware resources described above. A device or a method may be actualized by executing operations or processing of information depending on a use of the computer 2000.

For example, when communication is executed between the computer 2000 and an external device, the CPU 2012 may execute a communication program loaded in the RAM 2014, and instruct the communication interface 2022 to execute communication processing based on processing written in the communication program. Under the control of the CPU 2012, the communication interface 2022 reads transmission data stored in a transmission buffer processing region provided in a recording medium such as the RAM 2014 or the flash memory 2024, transmits the read transmission data to the network, and writes reception data received from the network into a reception buffer processing region or the like provided on the recording medium.

In addition, the CPU 2012 may cause all or a necessary portion of a file or a database stored in a recording medium such as the flash memory 2024 to be read into the RAM 2014, and execute various types of processing on the data on the RAM 2014. Next, the CPU 2012 writes back the processed data into the recording medium.

Various types of information such as various types of programs, data, a table, and a database may be stored in the recording medium and may be subjected to information processing. The CPU 2012 may execute, on the data read from the RAM 2014, various types of processing including various types of operations, information processing, conditional judgement, conditional branching, unconditional branching, information retrieval/replacement, or the like described in this specification and specified by instruction sequences of the programs, and write back a result into the RAM 2014. In addition, the CPU 2012 may search for information in a file, a database, or the like in the recording medium. For example, when multiple entries, each having an attribute value of a first attribute associated with an attribute value of a second attribute, is stored in the recording medium, the CPU 2012 may search for an entry having a designated attribute value of the first attribute that matches a condition from the multiple entries, and read the attribute value of the second attribute stored in the entry, thereby obtaining the attribute value of the second attribute associated with the first attribute that satisfies a predefined condition.

The programs or software modules explained above may be stored in the computer readable storage medium on the computer 2000 or in the vicinity of the computer 2000. A recording medium such as a hard disk or a RAM provided in a server system connected to a dedicated communication network or the Internet can be used as the computer readable storage medium. A program stored in the computer readable storage medium may be provided to the computer 2000 via a network.

The program installed in the computer 2000 to cause the computer 2000 to function as the integrated management apparatus 50 may work on the CPU 2012 or the like to cause the computer 2000 to function as each unit of the integrated management apparatus 50. The information processing described in these programs is read by the computer 2000 to function as each unit of the integrated management apparatus 50 which is a specific means in which software and the above described various hardware resources cooperate. Then, when calculation or processing of information according to the use purpose of the computer 2000 in the present embodiment is realized by these specific means, the unique integrated management apparatus 50 according to the use purpose is constructed.

The program installed in the computer 2000 to cause the computer 2000 to function as the vehicle management apparatus 60 may work on the CPU 2012 or the like to cause the computer 2000 to function as each unit of the vehicle management apparatus 60. The information processing described in these programs is read by the computer 2000 to function as each unit of the vehicle management apparatus 60 which is a specific means in which software and the above described various hardware resources cooperate. Then, when calculation or processing of information according to the use purpose of the computer 2000 in the present embodiment is realized by these specific means, the unique vehicle management apparatus 60 according to the use purpose is constructed.

Various embodiments have been explained with reference to the block diagrams and the like. In the block diagrams, each block may represent (1) a stage of a process in which an operation is executed, or (2) each unit of the device having a role in executing the operation. A specific stage and unit may be implemented by a dedicated circuit, a programmable circuit supplied with computer readable instructions stored on a computer readable storage medium, and/or a processor supplied with computer readable instructions stored on a computer readable storage medium. The dedicated circuit may include a digital and/or analog hardware circuit, or may include an integrated circuit (IC) and/or a discrete circuit. The programmable circuit may include a reconfigurable hardware circuit including logical AND, logical OR, logical XOR, logical NAND, logical NOR, and other logical operations, and a memory element such as a flip-flop, a register, a field programmable gate array (FPGA), a programmable logic array (PLA), or the like.

The computer readable storage medium may include any tangible device capable of storing instructions to be executed by an appropriate device. Thereby, the computer readable storage medium having instructions stored therein forms at least a part of a product including instructions which can be executed to provide means for executing processing procedures or operations specified in the block diagrams. Examples of the computer readable storage medium may include an electronic storage medium, a magnetic storage medium, an optical storage medium, an electromagnetic storage medium, a semiconductor storage medium, and the like. A more specific example of the computer readable storage medium may include a floppy disk, a diskette, a hard disk, a random-access memory (RAM), a read-only memory (ROM), an erasable programmable read-only memory (EPROM or flash memory), an electrically erasable programmable read-only memory (EEPROM), a static random-access memory (SRAM), a compact disc read-only memory (CD-ROM), a digital versatile disc (DVD), a Blu-ray (registered trademark) disc, a memory stick, or an integrated circuit card.

The computer readable instruction may include an assembler instruction, an instruction-set-architecture (ISA) instruction, a machine instruction, a machine dependent instruction, a microcode, a firmware instruction, state-setting data, or either of source code or object code written in any combination of one or more programming languages including an object-oriented programming language such as Smalltalk (registered trademark), JAVA (registered trademark), and C++, and a conventional procedural programming language such as a "C" programming language or a similar programming language.

Computer readable instructions may be provided to a processor of a general purpose computer, a special purpose computer, or other programmable data processing device, or to programmable circuit, locally or via a local area network (LAN), wide area network (WAN) such as the Internet, and a computer readable instruction may be executed to provide means for executing operations specified in the explained processing procedures or block diagrams. Examples of the processor include a computer processor, a processing unit, a microprocessor, a digital signal processor, a controller, a microcontroller, and the like.

While the present invention has been described by way of the embodiments, the technical scope of the present invention is not limited to the above described embodiment. It is apparent to persons skilled in the art that various alterations and improvements can be added to the above described embodiments. It is also apparent from the description of the claims that the embodiments to which such alterations or improvements are made can be included in the technical scope of the present invention.

The operations, procedures, steps, and stages etc. of each process performed by a device, system, program, and method shown in the claims, specification, or diagrams can be executed in any order as long as the order is not indicated by "before", "prior to", or the like and as long as the output from a previous process is not used in a later process. Even if the process flow is described using phrases such as "first" or "next" in the claims, specification, or drawings, it does not necessarily mean that the process must be performed in this order.

### EXPLANATION OF REFERENCES

5: system;
10: vehicle;
12: battery;
30, 31: business establishment;
40, 41: electric power control apparatus;
50, 51: integrated management apparatus;
60, 61: vehicle management apparatus;
70: electric power consumer;
80: power generation apparatus;
90: electric power network;
140: electric power control apparatus;
180: server;
190: communication network;
200: processing unit;
210: acquisition unit;
220: planning unit;
230: selection unit;
280: storage unit;
290: communication unit;
300: processing unit;
310: acquisition unit;
320: arbitration unit;
330: selection unit;
340: classification unit;
380: storage unit;
390: communication unit;
601, 602, 603, 604, 610, 620: sign;
2000: computer;
2010: host controller;
2012: CPU;
2014: RAM;
2020: input/output controller;
2022: communication interface;
2024: flash memory;
2026: ROM;
2040: input/output chip.

## Claims

1. A system comprising:
a plurality of vehicles (10); and
an acquisition unit (310) which acquires information indicating a required electric power amount by which transfer of electric power is required between a battery included in a vehicle (10) and an electric power network, and information indicating a transferable electric power amount by which the battery can transfer electric power with the electric power network, **characterized in that** the system further comprises
a selection unit (330) which selects a vehicle (10) with a smaller difference between the transferable electric power amount and the required electric power amount than others by priority among the plurality of vehicles (10) as a vehicle (10) including a battery which is to perform electric power transfer with the electric power network.

2. The system according to claim 1, further comprising:
a classification unit (340) which classifies the plurality of vehicles (10) into a plurality of groups based on a combination of a state of charge of a battery included in each of the plurality of vehicles (10) and the transferable electric power amount, wherein
the selection unit (330) selects the vehicle (10) including the battery which is to perform electric power transfer with the electric power network from among vehicles (10) classified into a group which is selected based on information indicating whether electric power supply from the battery to the electric power network is required and the required electric power amount among the plurality of groups classified by the classification unit (340).

3. The system according to claim 1, further comprising:
a classification unit (340) which classifies the plurality of vehicles (10) into a plurality of groups based on a combination of (i) a state of charge of a battery included in each of the plurality of vehicles (10) and (ii) a time interval between a time at end of a period in which electric power is to be supplied from the battery to the electric power network and a scheduled time at which use of each of the plurality of batteries is to be started, wherein
when electric power is to be supplied from the battery to the electric power network, the selection unit (330) selects a vehicle (10) classified into a group having the time interval that is longer than others among the plurality of groups classified by the classification unit (340) by priority as the vehicle (10) including the battery which is to perform electric power transfer with the electric power network.

4. The system according to claim 1, further comprising:
a classification unit (340) which classifies the plurality of vehicles (10) into a plurality of groups based on a combination of (i) a state of charge of a battery included in each of the plurality of vehicles (10) and (ii) a time interval between a time at end of a period in which electric power is to be supplied from the electric power network to the battery and a scheduled time at which use of each of the plurality of batteries is to be started, wherein
when electric power is to be supplied from the electric power network to the battery, the selection unit (330) selects a vehicle (10) classified into a group having the time interval that is shorter than others among the plurality of groups classified by the classification unit (340) by priority as the vehicle (10) including the battery which is to perform electric power transfer with the electric power network.

5. A method for a system comprising a plurality of vehicles, the method comprising:
acquiring information indicating a required electric power amount by which transfer of electric power is required between a battery included in a vehicle and an electric power network, and information indicating a transferable electric power amount by which the battery can transfer electric power with the electric power network, **characterized in that** the system further comprises
selecting a vehicle with a smaller difference between the transferable electric power amount and the required electric power amount than others by priority among the plurality of vehicles as a vehicle including a battery which is to perform electric power transfer with the electric power network.

6. A program comprising instructions that when executed in a computer (2000) causes the system of claim 1 to execute the method steps of claim 5.

7. A computer readable medium storing the program according to claim 6.

## Patentansprüche

1. System, umfassend:
eine Mehrzahl von Fahrzeugen (10); und
eine Akquirierungseinheit (310), welche Informationen, welche eine benötigte elektrische Leistungsmenge angeben, mit welcher eine Übertragung einer elektrischen Leistung zwischen einer Batterie, welche in einem Fahrzeug (10) umfasst ist, und einem elektrischen Leistungsnetzwerk benötigt ist, und Informationen akquiriert, welche eine übertragbare elektrische Leistungsmenge angeben, mit welcher die Batterie eine elektrische Leistung mit dem elektrischen Leistungsnetzwerk übertragen kann, **dadurch gekennzeichnet, dass** das System ferner umfasst:
eine Auswahleinheit (330), welche ein Fahrzeug (10) mit einem kleineren Unterschied zwischen der übertragbaren elektrischen Leistungsmenge und der benötigten elektrischen Leistungsmenge als andere durch eine Priorität unter der Mehrzahl von Fahrzeugen (10) als ein Fahrzeug (10) auswählt, welches eine Batterie umfasst, welche eine elektrische Leistungsübertragung mit dem elektrischen Leistungsnetzwerk durchführen soll.

2. System nach Anspruch 1, ferner umfassend:
eine Klassifizierungseinheit (340), welche die Mehrzahl der Fahrzeuge (10) in eine Mehrzahl von Gruppen klassifiziert, auf Grundlage einer Kombination eines Ladezustands einer Batterie, welche in jedem der Mehrzahl von Fahrzeugen (10) umfasst ist, und der übertragbaren elektrischen Leistungsmenge, wobei
die Auswahleinheit (330) das Fahrzeug (10), welches die Batterie umfasst, welche eine elektrische Leistungsübertragung mit dem elektrischen Leistungsnetzwerk durchführen soll, aus Fahrzeugen (10) auswählt, welche in eine Gruppe klassifiziert sind, welche auf Grundlage von Informationen, welche angeben, ob eine elektrisch Leistungszufuhr von der Batterie zu dem elektrischen Leistungsnetzwerk benötigt ist, und der benötigten elektrischen Leistungsmenge aus der Mehrzahl von Gruppen ausgewählt ist, welche durch die Klassifizierungseinheit (340) klassifiziert sind.

3. System nach Anspruch 1, ferner umfassend:
eine Klassifizierungseinheit (340), welche die Mehrzahl der Fahrzeuge (10) in eine Mehrzahl von Gruppen klassifiziert, auf Grundlage einer Kombination aus (i) einem Ladezustand einer Batterie, welche in jedem der Mehrzahl von Fahrzeugen (10) umfasst ist, und (ii) einem Zeitintervall zwischen einer Zeit am Ende einer Periode, in welcher elektrische Leistung von der Batterie zu dem elektrischen Leistungsnetzwerk zugeführt werden soll, und einer geplanten Zeit, zu welcher eine Nutzung jeder der Mehrzahl von Batterien gestartet werden soll, wobei,
wenn eine elektrische Leistung von der Batterie zu dem elektrischen Leistungsnetzwerk zugeführt werden soll, die Auswahleinheit (330) ein Fahrzeug (10), welches in eine Gruppe klassifiziert ist, welche das Zeitintervall aufweist, welches länger als andere unter der Mehrzahl von Gruppen ist, welche durch die Klassifizierungseinheit (340) klassifiziert sind, durch eine Priorität als das Fahrzeug (10) auswählt, welches die Batterie umfasst, welche eine elektrische Leistungsübertragung mit dem elektrischen Leistungsnetzwerk durchführen soll.

4. System nach Anspruch 1, ferner umfassend:
eine Klassifizierungseinheit (340), welche die Mehrzahl der Fahrzeuge (10) in eine Mehrzahl von Gruppen klassifiziert, auf Grundlage einer Kombination aus (i) einem Ladezustand einer Batterie, welche in jedem der Mehrzahl von Fahrzeugen (10) umfasst ist, und (ii) einem Zeitintervall zwischen einer Zeit am Ende einer Periode, in welcher elektrische Leistung von dem elektrischen Leistungsnetzwerk zu der Batterie zugeführt werden soll, und einer geplanten Zeit, zu welcher eine Nutzung jeder der Mehrzahl von Batterien gestartet werden soll, wobei,
wenn eine elektrische Leistung von dem elektrischen Leistungsnetzwerk zu der Batterie zugeführt werden soll, die Auswahleinheit (330) ein Fahrzeug (10), welches in eine Gruppe klassifiziert ist, welche das Zeitintervall aufweist, welches kürzer als andere unter der Mehrzahl von Gruppen ist, welche durch die Klassifizierungseinheit (340) klassifiziert sind, durch eine Priorität als das Fahrzeug (10) auswählt, welches die Batterie umfasst, welche eine elektrische Leistungsübertragung mit dem elektrischen Leistungsnetzwerk durchführen soll.

5. Verfahren für ein System, welches eine Mehrzahl von Fahrzeugen umfasst, wobei das Verfahren umfasst:
Akquirieren von Informationen, welche eine benötigte elektrische Leistungsmenge angeben, mit welcher eine Übertragung einer elektrischen Leistung zwischen einer Batterie, welche in einem Fahrzeug umfasst ist, und einem elektrischen Leistungsnetzwerk benötigt ist, und Informationen, welche eine übertragbare elektrische Leistungsmenge angeben, mit welcher die Batterie eine elektrische Leistung mit dem elektrischen Leistungsnetzwerk übertragen kann, **dadurch gekennzeichnet, dass** das System ferner umfasst
Auswählen eines Fahrzeugs mit einem kleineren Unterschied zwischen der übertragbaren elektrischen Leistungsmenge und der benötigten elektrischen Leistungsmenge als andere durch eine Priorität unter der Mehrzahl von Fahrzeugen als ein Fahrzeug, welches eine Batterie umfasst, welche eine elektrische Leistungsübertragung mit dem elektrischen Leistungsnetzwerk durchführen soll.

6. Programm, welches Anweisungen umfasst, welches, wenn in einem Computer (2000) ausgeführt, das System nach Anspruch 1 veranlasst, die Verfahrensschritte nach Anspruch 5 auszuführen.

7. Computerlesbares Medium, welches das Programm nach Anspruch 6 speichert.

## Revendications

1. Système comprenant :
une pluralité de véhicules (10) ; et
une unité d'acquisition (310) qui acquiert des informations indiquant une quantité de puissance électrique requise par laquelle un transfert de puissance électrique est requis entre une batterie incluse dans un véhicule (10) et un réseau électrique, et des informations indiquant une quantité de puissance électrique transférable par laquelle la batterie peut transférer de la puissance électrique avec le réseau électrique, **caractérisé en ce que** le système comprend en outre
une unité de sélection (330) qui sélectionne un véhicule (10) avec une différence entre la quantité de puissance électrique transférable et la quantité de puissance électrique requise plus faible que d'autres par priorité parmi la pluralité de véhicules (10) comme le véhicule (10) comportant une batterie qui doit effectuer un transfert de puissance électrique avec le réseau électrique.

2. Système selon la revendication 1, comprenant en outre :
une unité de classification (340) qui classe la pluralité de véhicules (10) en une pluralité de groupes sur la base d'une combinaison d'un état de charge d'une batterie incluse dans chacun de la pluralité de véhicules (10) et de la quantité de puissance électrique transférable, dans lequel
l'unité de sélection (330) sélectionne le véhicule (10) comportant la batterie qui doit effectuer un transfert de puissance électrique avec le réseau électrique parmi les véhicules (10) classés dans un groupe qui est sélectionné sur la base d'informations indiquant si une alimentation électrique de la batterie au réseau électrique est nécessaire et la quantité de puissance électrique requise parmi la pluralité de groupes classés par l'unité de classification (340).

3. Système selon la revendication 1, comprenant en outre :
une unité de classification (340) qui classe la pluralité de véhicules (10) en une pluralité de groupes sur la base d'une combinaison de (i) un état de charge d'une batterie incluse dans chacun de la pluralité de véhicules (10) et (ii) un intervalle de temps entre un moment à la fin d'une période au cours de laquelle de la puissance électrique doit être fournie par la batterie au réseau électrique et un moment planifié auquel l'utilisation de chacune de la pluralité de batteries doit commencer, dans lequel
lorsque de la puissance électrique doit être fournie par la batterie au réseau électrique, l'unité de sélection (330) sélectionne un véhicule (10) classé dans un groupe ayant l'intervalle de temps qui est plus long que d'autres parmi la pluralité de groupes classés par l'unité de classification (340) par priorité comme le véhicule (10) comportant la batterie qui doit effectuer un transfert de puissance électrique avec le réseau électrique.

4. Système selon la revendication 1, comprenant en outre :
une unité de classification (340) qui classe la pluralité de véhicules (10) en une pluralité de groupes sur la base d'une combinaison de (i) un état de charge d'une batterie incluse dans chacun de la pluralité de véhicules (10) et (ii) un intervalle de temps entre un moment à la fin d'une période au cours de laquelle de la puissance électrique doit être fournie par le réseau électrique à la batterie et un moment planifié auquel l'utilisation de chacune de la pluralité de batteries doit commencer, dans lequel
lorsque de la puissance électrique doit être fournie par le réseau électrique à la batterie, l'unité de sélection (330) sélectionne un véhicule (10) classé dans un groupe ayant l'intervalle de temps qui est plus court que d'autres parmi la pluralité de groupes classés par l'unité de classification (340) par priorité comme le véhicule (10) comportant la batterie qui doit effectuer un transfert de puissance électrique avec le réseau électrique.

5. Procédé pour un système comprenant une pluralité de véhicules, le procédé comprenant :
l'acquisition d'informations indiquant une quantité de puissance électrique requise par laquelle un transfert de puissance électrique est requis entre une batterie incluse dans un véhicule et un réseau électrique, et d'informations indiquant une quantité de puissance électrique transférable par laquelle la batterie peut transférer de la puissance électrique avec le réseau électrique, **caractérisé en ce que** le système comprend en outre
la sélection d'un véhicule avec une différence entre la quantité de puissance électrique transférable et la quantité de puissance électrique requise plus faible que d'autres par priorité parmi la pluralité de véhicules comme le véhicule comportant une batterie qui doit effectuer un transfert de puissance électrique avec le réseau électrique.

6. Programme comprenant des instructions qui, lorsqu'elles sont exécutées dans un ordinateur (2000), amènent le système selon la revendication 1 à exécuter les étapes de procédé selon la revendication 5.

7. Support lisible par ordinateur stockant le programme selon la revendication 6.
